(19) Europäisches Patentamt
European Patent Office
Office européen des brevets

(11) **EP 1 558 857 B1**

(12) **EUROPEAN PATENT SPECIFICATION**

(45) Date of publication and mention
of the grant of the patent:
**18.04.2007 Bulletin 2007/16**

(51) Int Cl.:
*F16F 1/06* *(2006.01)*    *B65G 27/18* *(2006.01)*

(21) Application number: **03773195.7**

(86) International application number:
**PCT/US2003/031837**

(22) Date of filing: **06.10.2003**

(87) International publication number:
**WO 2004/035427 (29.04.2004 Gazette 2004/18)**

(54) **VIBRATORY MACHINES UTILIZING OVOID OR RECTANGULAR SHAPED COIL DRIVE SPRINGS**

OVAL ODER RECHTECKIG GEFORMTE SCHRAUBENFÖRMIGE TRIEBFEDERN VERWENDENDE SCHWINGUNGSERZEUGER

MACHINES A VIBRATION COMPRENANT DES RESSORTS D'ENTRAINEMENT HELICOIDAUX DE FORME OVOIDE OU RECTANGULAIRE

(84) Designated Contracting States:
**ES**

(30) Priority: **16.10.2002 US 272270**

(43) Date of publication of application:
**03.08.2005 Bulletin 2005/31**

(73) Proprietor: **FMC Technologies, Inc.**
**Chicago, IL 60601 (US)**

(72) Inventors:
• **CABLE, Jeffrey, L.**
**New Florence, PA 15944 (US)**
• **KURNOCIK, William, J.**
**Blairsville, PA 15717 (US)**
• **FINK, Daniel, R.**
**Greensburgh, PA 15601 (US)**
• **ORR, Richard, J.**
**Homer City, PA 15748 (US)**

(74) Representative: **Hammler, Martin Franz et al**
**Phillips & Leigh**
**5 Pemberton Row**
**London EC4A 3BA (GB)**

(56) References cited:
GB-A- 1 139 265     US-A- 274 715
US-A- 1 867 723     US-A- 4 040 303
US-A- 5 259 599

**Description**

**Technical Field of the Invention**

The invention relates to a vibratory conveying apparatus, such as a vibratory feeder or conveyor. Particularly, the invention relates to a vibratory conveying apparatus having a spring system used between a vibratory exciter and a conveying trough of the vibratory conveying apparatus.

**Background of the Invention**

Vibratory feeders and conveyors are widely used in a variety of heavy to light industries for such purposes as the metering of bulk material, such as ore, stone, grain, various chemical powders and the like, from storage bins to other processing equipment, or to convey bulk material from one industrial process to another. Vibratory feeder designs generally consist of a trough member connected to one or more base members by means of spring mechanisms such as wound steel wire coil springs or stacked arrays of elastomer rubber blocks. A vibratory exciter generates vibratory motion. The vibratory exciter can be in the form of an electric motor that rotates eccentric weights mounted either on the motor shaft, or on a separate shaft inserted in bearing mounts. Some multi-mass feeder designs operate at a speed that is close to the natural frequency of the feeder mass/spring system to utilize the mechanical advantage due to the resonance phenomena. US 4040303 concerns a two mass material handling apparatus in which in one embodiment a vibratory exciter of the rotary eccentric weight type is connected to a trough member through a plurality of coil springs.

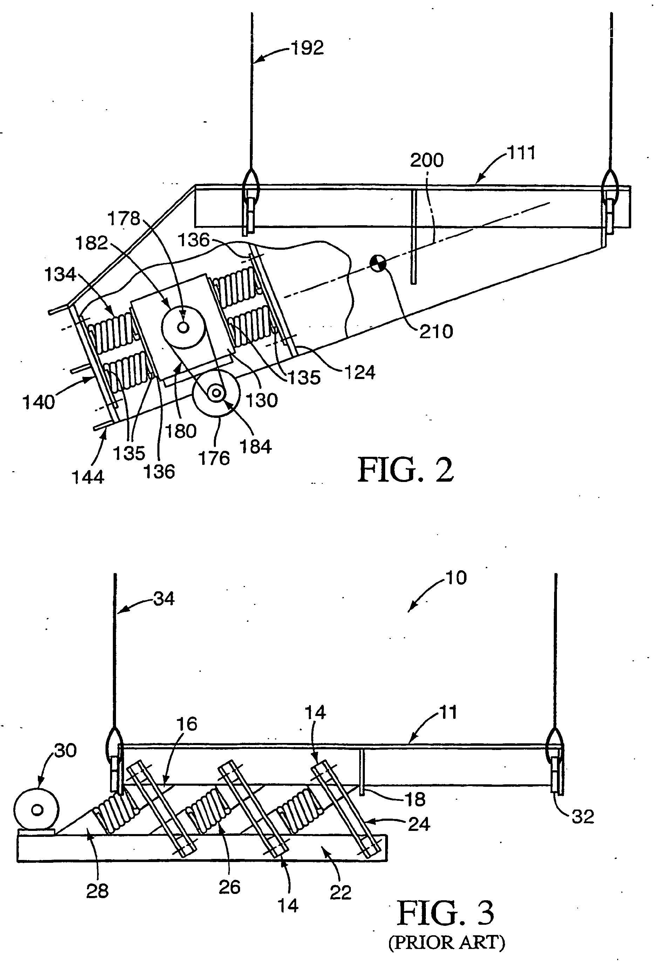

A typical prior art coil spring vibratory feeder 10 is depicted in FIGURE 3. A feeder trough member 11 is fitted with a plurality of spring mounting blocks 14, and coil spring mounting plate assemblies 16. One or more reinforcing ribs 18 encircle the bottom of the feeder trough 11. The feeder trough 11 is connected to a base member 22 by means of a plurality of leaf springs 24 bolted to the spring mounting blocks 14 located on both the feeder trough member 11, and the base member 22. Steel coil springs 26 are connected between the mounting plate assemblies 16 on the feeder trough member 11, and mounting plate assemblies 28 welded to the feeder base member 22. A vibratory exciter 30 is also connected to the base member 22. Suspension hooks 32 and wire suspension cables 34 provide means to support the feeder at the operating site.

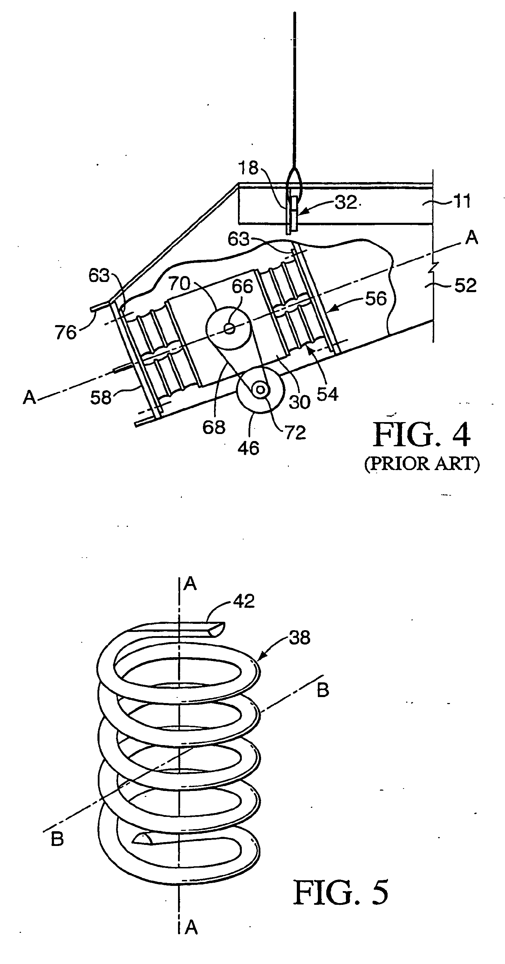

An enlarged perspective view of a typical prior art wound steel coil spring 3 8 is depicted in FIGURE 5. Lines representing the longitudinal axis A- A and the lateral axis B-B are shown in FIGURE 5. The spring height is measured along the axis A-A and the spring width is measured along the axis B- B. The coil spring 38 is usually ground on the ends 42 so that they are flat and parallel to each other to facilitate proper mounting in the feeder.

A typical heavy-duty coil spring of this design might be approximately 305mm (12 inches) high, have a mean diameter of about 152mm (6 inches), and be wound from solid steel rod about 19mm (3/4 of an inch) in diameter. It would typically have a dynamic compressive (i.e. along the A-A axis) spring rate of about 263 Nmm$^{-1}$ (1500lbs/in.), to be within the safe operating stress range of 69 - 83 MPa (10,000 to 12,000 psi).

A two mass vibratory feeder, such as the example illustrated in FIGURE 3, would have a dynamic spring rate requirement given by the relationship:

$$K_d = \frac{\omega_0^2}{1000} \cdot m_r$$

Where:

   $K_d$ = dynamic spring rate in Nmm$^{-1}$
   $\omega_0$ = natural frequency in radians/sec. ($2\pi f_o$ where $f_0$ is the natural frequency in Hz)
   $m_r$ = resultant mass of one or the other of the feeder masses in kg

(or

$$K_d = \frac{\omega_0^2}{g} \cdot W_r$$

Where:

$K_d$ = dynamic spring rate in lbs/in.
$\omega_0$ = natural frequency in radians/sec.
$W_r$ = resultant weight of one or the other of the feeder masses in lbs.
g = acceleration due to gravity (in./sec.$^2$ ( = 386 in./sec.$^2$))).

For example, a vibratory feeder having a desired natural frequency of 20 Hz. (1200 cpm.), and a resultant mass of 227 kg (weight of 500 lbs.), would have a dynamic spring rate of:

$$K_d = \frac{(2\pi \cdot 20)^2}{1000}.227 \approx 3584 \text{ Nmm}^{-1} \text{ (20,455 lbs./in.)}$$

Using the above described coil springs rated at 263 Nmm$^{-1}$ (1500 lbs./in.) each, it would require at least 14 (3584/263 = 13.63) individual springs operating in parallel to make up the required total spring rate.

In designing the coil spring, it is important to maintain a certain relationship between its height and diameter (such as < 2: 1). This is referred to as "column stability." Sufficient column stability is required, otherwise any slight off vertical axis loading might cause the spring to buckle or move sideways.

Referring once again to FIGURE 5, it is noted that the coil spring 38 has a relatively low spring rate along the lateral axis B-B. If the spring is applied such that the longitudinal axis A-A was other than vertical, such as shown in FIGURES 3 and 4, the off axis loading, due to the weight of the base members, i.e., the base member 22 and the exciter 30 in FIGURE 3, or the exciter 30 and a drive motor 46 in FIGURE 4, would cause the springs 54 to sag or bend in the direction of the lateral axis B-B. The feeder would not function correctly. The prior art vibratory equipment used the additional leaf springs 24 as shown in FIGURE 3, to provide the required support between the trough and base members. The leaf springs 24, do not allow the coil springs 26 to sag or bend, while maintaining the desired motion of the feeder. This configuration also places constraints on the size and geometry of the feeder design, affecting the cost of equipment and its installation.

Another consideration in spring design concerns the dynamic stress the spring undergoes during operation. Generally, material composition and the physics involved impose limitations on the operating stress. Unfortunately, normal manufacturing methods and processes add stresses to further restrict operating limits. For example, springs that material and physical considerations indicate should operate with long life at stress levels of 139 - 172 MPa (20,000 to 25,000 psi), from a practical standpoint, can only be operated at levels of 69 - 83 MPa (10,000 to 12,000 psi) to meet acceptable life expectation. Such limitations usually mean that smaller wire sizes have to be used for the springs, and result in a large number of springs required for a given application, affecting the size and geometry of the feeder.

One way of avoiding the above-mentioned design limitations is to substitute elastomer blocks, such as rubber blocks, for the wound steel coil springs. The characteristics of the rubber blocks are such that very large amounts of energy can be stored per given volume when compared to the steel coil springs. Also, the rubber blocks can be of rectangular shape, allowing the blocks to provide sufficient stiffness along a transverse axis for supporting the weight of vibratory drives.

A prior art vibratory feeder design using elastomer rubber springs is depicted in FIGURE 4. A side view of the feeder is shown with a section of a wing plate member 52 removed, and with only the rear portion of the feeder visible. The trough member 11 is shown connected to the wing plate member 52. One of a plurality of reinforcing ribs 18 is shown surrounding the bottom of the trough 11 and connected to the wing plate member 52. The vibratory exciter member 30 is positioned between a spring mounting plate 56 and a back plate 58 and held in place by the elastomer springs 54, which are bonded to mounting plates 63. The springs mounting plates 63 are bolted to the coil spring mounting plate 56 and the vibratory exciter member 30 at the front end, and to the vibratory exciter member 30 and the back plate 58 at the rear end. The drive motor 46 is mounted to the base of the vibratory exciter member 30, and rotates the shaft 66 by means of the drive belt 68 and the pulleys 70 and 72. Eccentric weights (not shown) mounted on the shaft 66, generate vibratory motion of the feeder as the shaft 66 is rotated.

The back plate 58 is bolted to the ends of the wing plate members 52 such that the elastomer spring members 54 are compressed by a known amount, determined by the dimension between the spring mounting plate 56, and the end of the wing plate members 52. Reinforcing ribs 76 are welded to the back plate 58 for stiffening the back plate 58 due to the compression loading of the elastomer springs 54. Suspension hooks 32 and wire suspension cables 34 provide means to install the feeder at the operating site.

Apparatus manufactured at FMC Technologies in Homer City PA have utilized springs made from an elastomer material such as polyisoprene rubber. The two mass vibratory feeder design illustrated in FIGURE 4 is an example of the application of such rubber springs. Typically, in order to achieve the required deflection, each spring element 54 is comprised of about four rubber blocks sandwiched between thin aluminum heat dissipating plates. Utilizing typical rubber blocks 152 mm (6 inches) long by 102 mm (4 inches) wide, and 38 mm (1.5 inches) thick, each spring element 54 would have a spring rate of approximately 650 Nmm$^{-1}$ (3700lbs./in.). Using the spring rate requirement for the example feeder calculated above, only 6 spring elements 54 (3584/650 ≈ 5.5) would be needed compared to the 14 steel coil springs.

Furthermore, mounting the spring elements 54 with the long dimension of the rubber block parallel to the vertical axis of the vibratory exciter 30 provides mechanical support for the exciter 30, while maintaining linear motion along the drive axis A-A, thus eliminating the need for the leaf springs 24 of FIGURE 3. Also, due to the large difference between the spring rates of the rubber blocks in the shear direction as compared to the compression direction, the natural frequency in the shear and compression direction differs by a factor of two or more. Accordingly, the operating speed of the feeder, selected to be close to the natural frequency of the spring/mass system in the compressive direction to take advantage of resonance, does not resonate with the spring/mass system in the shear direction, allowing the use of a single shaft eccentric weight exciter design, while maintaining linear motion. In contrast, the feeder design of FIGURE 3 often requires the use of a two eccentric weight shaft exciter, each shaft rotating in opposite directions to produce linear motion, as a means to avoid such resonance and motion problems. These advantages represent a considerable savings in overall size requirement, design flexibility and initial cost.

Unfortunately, manufacturing elastomer springs is difficult as the processes are hard to control to obtain consistent results in spring rates and material stability. High levels of material science, practical experience and strict process quality control are required for a manufacturer to make engineering grade rubber products. This of course greatly affects the cost of the spring elements.

An initial application problem with elastomer springs is that the amount of allowed deflection per elastomer block is a function of the thickness and dimensions of the rubber element. If the rubber element is too thick, or the ratio of thickness to length dimensions too great, the internal heat, generated by hysteresis as the elastomer is deflected, can become hot enough to actually melt the elastomer. Therefore, it is a customary practice to stack several thinner, properly proportioned, elastomer blocks in series, separated by aluminum plates that dissipate the heat (See FIGURE 4). Using this design, the required machine deflection can be obtained, and by arranging a plurality of these stacks together in a parallel relationship, the required spring rate for a given feeder design can also be obtained. The individual elastomer blocks are bonded to the aluminum plates in an exacting process requiring chemical preparation, adhesive application, clamped assembly fixtures, and precise thermal curing. Therefore, the elastomer spring arrays are relatively expensive to manufacture.

A further drawback of elastomer block springs, resulting in increased cost, is the fact that the elastomer block spring elements tend to vary in spring rate for a given size even from the best and most careful manufacturers. This means the elements must be graded into spring rate groups for practical use in selecting required spring system rates and to avoid over heating individual out-of-range spring elements due to overstress. Also, as the elastomer spring elements are worked during operation, some further curing of the elastomer may take place over time, changing its rate. If a sufficient number of spring elements change rate this way in a tuned feeder design, referred to as "aging", it becomes necessary to either replace the spring elements or to change the operating speed of the feeder, another costly proposition.

The present inventors have recognized the desirability of providing a vibratory conveying apparatus design that overcomes the drawbacks associated with prior art drive springs that typically utilize round wound steel wire coil springs or stacked arrays of elastomer blocks. Furthermore, the present inventors have recognized that through the elimination of such drawbacks, cost is dramatically reduced. Cost is reduced by enabling simple, efficient spring designs, and by the simplification of manufacturing processes. Also, the present inventors have recognized the desirability of providing more stable and reliable products using such spring designs.

## Summary of the Invention

The present invention provides a vibratory conveying apparatus, such as a feeder or conveyor, according to claim 1. A drive spring system driven by the vibratory exciter to vibrate the trough may comprise substantially rectangular or ovoid-shaped springs that provide spring rates and deflections comparable to that of elastomer spring systems. The spring system also provides sufficient stiffness along the transverse loading axis of the springs to support the weight of the exciter of the apparatus where the exciter is supported from the trough by opposing springs of the drive spring system.

A vibratory conveying apparatus according to one embodiment of the invention includes the trough having a conveying surface, the vibratory exciter, and a first coil spring arranged to be compressed between a first portion of the trough and a first portion of the exciter. The first coil spring has a longitudinal axis around which the first coil spring is wound, a transverse axis and a lateral axis, the transverse axis and the lateral axis being perpendicular and in a plane that is perpendicular to the longitudinal axis. An outside dimension of the first coil spring is greater along the lateral axis than along the transverse axis. The greater outside dimension along the lateral axis allows the first coil spring to support greater weight when the longitudinal axis is arranged in a non-vertical orientation.

The apparatus can further include a second coil spring arranged to be compressed between a second portion of the trough and a second portion of the exciter, the second coil spring also having a longitudinal axis around which the second coil spring is wound, a transverse axis and a lateral axis, the transverse axis and the lateral axis being perpendicular and in a plane that is perpendicular to the longitudinal axis. An outside dimension of the second coil spring is also greater along the lateral axis than along the transverse axis. The greater outside dimension along the lateral axis allows the second coil spring to support greater weight when the longitudinal axis is arranged in a non-vertical orientation. The first and second portions of the exciter are preferably on opposite sides of the exciter and the first and second coil springs are arranged to be compressed and unloaded in opposition during operation of the conveying apparatus.

The trough preferably includes a trough bracket assembly having a front plate and a back plate. The first portion of the trough is located on the front plate and the second portion of the trough is located on the back plate.

To achieve the desired overall spring rate for the conveying apparatus, multiple coil springs of the above-described shape can be arranged on opposite sides of the exciter to be compressed against the front and back plates.

Numerous other advantages and features of the present invention will become readily apparent from the following detailed description of the invention and the embodiments thereof, and from the accompanying drawings.

## Brief Description of the Drawings

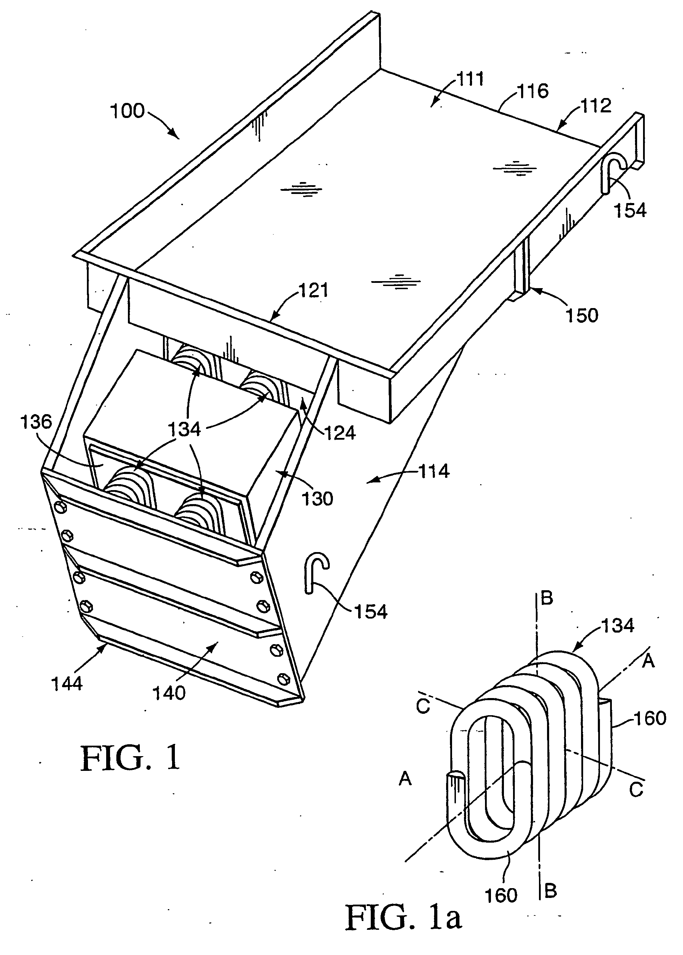

Figure 1 is a perspective view of a vibratory feeder incorporating ovoid-shaped coil springs of the invention.

Figure 1 a is an enlarged perspective view of an ovoid-shaped coil spring from Figure 1 with the longitudinal, lateral and transverse axis indicated by dashed lines.

Figure 2 is a side view of the vibratory feeder of FIGURE 1, with a portion of the wing plate removed to view the ovoid-shaped coil springs.

Figure 3 is a side view of a prior art vibratory feeder utilizing standard coil springs.

Figure 4 is a side view of a prior art vibratory feeder utilizing stacked elastomer rubber springs.

Figure 5 is perspective view of a typical wound steel coil spring of the prior art.

## Detailed Description of the Preferred Embodiments

While this invention is susceptible of embodiment in many different forms, there are shown in the drawings, and will be described herein in detail, specific embodiments thereof with the understanding that the present disclosure is to be considered as an exemplification of the principles of the invention and is not intended to limit the invention to the specific embodiments illustrated.

A conveying apparatus 100 according to the invention is shown in FIGURE 1. A trough or pan member 111, having a conveying surface 112, includes a trough bracket assembly 113. The bracket assembly 113 includes wing plate members 114 sized and positioned such that a discharge lip 116 of the trough or pan member 111 extends beyond the wing plate members 114 at the front end of the vibratory feeder. The wing plate members 114 extend beyond the trough inlet 121 at the rear of the feeder. A coil spring mounting plate 124 is welded in place between the wing plate members 114 located below but near the trough inlet 121 towards the rear of the feeder.

A vibratory exciter mechanism 130 is positioned between the wing plate members 114 that extend beyond the trough inlet 121 at the rear of the feeder. The vibratory exciter mechanism 130 is held in place by means of two sets of ovoid-shaped coil springs 134 (as shown in FIGURE 1) or rectangular coil springs (not shown). The coil ends of each set of ovoid-shaped coil springs 134 are typically placed over spring seats 135 which are welded to end plates 136. One set of coil springs/end plates is then fastened between the coil spring mounting plate 124 and the vibratory exciter mechanism 130, while the remaining set of coil springs/end plates is fastened between the vibratory exciter mechanism 130, and a back plate 140. The back plate 140 is bolted to the ends of the wing plate members 114, compressing the coil springs 134 by a specified amount set by the distance between the coil spring mounting plate 124 and the ends of the wing plate members 114. Reinforcing ribs 144 are welded to the back plate 140 to stiffen the structure due to the compression load of the coil springs 134. Ribs 150 are usually added to the trough or pan member 111 to provide stiffness and structural integrity. Suspension hooks 154 are welded to the trough structure 111 and/or the wing plate structure 114 to facilitate installation of the feeder at the operation site where it is typically hung or suspended by means of wire cables under the discharge end of a supply hopper.

FIGURE 1a is a close up perspective view of an ovoid-shaped coil spring 134, the ends 160 of which have been ground flat and parallel to each other to facilitate welding between the end plates 136. For reference, a line A-A is shown along the longitudinal axis of the coil spring 14, a line B-B is shown along a "lateral" axis, and a line C-C is shown along a "transverse" axis. The height of the spring is measured along the A-A axis, the major diameter along the B-B axis, and the minor diameter along the C-C axis.

Although ovoid-shaped springs are somewhat easier to manufacture, springs closer to true rectangles can also be used, as sold by DRACO Spring Mfg. Co. of Houston, Texas, U.S.A. The DRACO springs are manufactured according to a process such that the spring can be utilized at higher stress levels, making it competitive in dimension to the elastomer spring arrays. The details of this spring and the manufacturing process thereof have been disclosed in a separate patent application U.S. publication No. 2002/0190452.

FIGURE 2 is a side view of the feeder of FIGURE 1 with a section of the wing plate member 114 removed. The trough member 111, having the discharge lip 116, is shown connected to the wing plate member 114. The reinforcing ribs 150 are seen surrounding the bottom of the trough 111 and connected to the wing plate member 114. The vibratory exciter member 130 is positioned between the coil spring mounting plate 124 and the backplate 140 and held in place by the ovoid-shaped coil springs 134 that are placed over the spring seats 135 which are welded to the coil spring end plates 136. The end plates 136 are bolted to the spring system mounting plate 124 and the vibratory exciter member 130 at the front end, and the vibratory exciter member 130 and the back plate 140 at the rear end.

A drive motor 176 is mounted to the base of the vibratory exciter member 130, and rotates a shaft 178 by means of a drive belt 180 and pulleys 182 and 184. Eccentric weights (not shown) mounted on the shaft 178, generate vibratory motion of the feeder as the shaft 178 is rotated. The back plate 140 is bolted to the ends of the wing plate members 114 such that the ovoid-shaped coil springs 134 are compressed by a known amount, determined by the dimension between the coil spring mounting plate 124, and the end of the wing plate members 114. Reinforcing ribs 144 are welded to the backplate 140 for stiffening due to the compression loading of the coil springs 134. The suspension hooks 154 and wire suspension cables 192 provide means to install the feeder at the user's site. An imaginary drive line 200 is shown at a specific angle to the bottom 112 of the trough member 111, and along the line of force generated by the vibratory exciter 130, such that it passes through or close to the center of gravity 210 of the entire feeder assembly thereby minimizing or eliminating, off-axis motion of the feeder during operation.

The spring system of the invention provides a steel coil spring that has a stiff rate in the shear direction to support the weight of the vibratory exciter mechanism, while having a compressive spring rate comparable to that of the elastomer rubber spring element 54 of FIGURE 4.

The ovoid-shaped spring described in this disclosure is a preferred embodiment of the spring design, but other embodiments that are more or less rectangular in shape may be manufactured using the methods, equipment and techniques required for the ovoid shape.

The ovoid shape provides exemplary performance, ease of manufacturing, and reasonable cost.

One exemplary ovoid-shaped spring 134 as shown in FIGURE 1a includes a wire diameter, coil height (the length along the A-A axis), coil diameter (measured along the C-C axis) chosen to result in a spring design that has a spring rate of approximately 700 Nmm-1 (4000 lbs/in.), and, at a design deflection of approximately 9.5 mm (3/8 inch), a working stress up to 110 MPa (16000 psi). The precision manufacturing methods, and techniques used to produce the ovoid-shaped spring result in being able to work the spring at higher stress levels in demanding applications such as vibratory feeders and conveyors. The ends 160 of the ovoid-shaped spring have been ground flat and squared such as to be parallel to each other to facilitate installation in the vibratory feeder.

The overall dimensions and spring rate of the resultant spring design herewith described are close to those of the elastomer spring element 54 of FIGURE 4, the prior art vibratory feeder described above. This enables a direct substitution of spring elements thus only requiring minor accommodation modifications to a proven vibratory feeder design. The spring rate along the B-B axis, the shear direction of the ovoid, is much greater than that along the A-A axis as can readily be imagined from observing FIGURE 1a, perhaps as much as 4 times greater, making the rate of the example spring 2800 Nmm-1 (16,000lbs,/in.) along this B-B axis.

Also, installing the spring elements 134 with the long, lateral axis dimension of the ovoid-shaped spring substantially parallel to the vertical axis of the vibratory exciter 130 (as shown in FIGURES 1 and 2), provides more than sufficient mechanical support for the exciter 130, as each link of the ovoid-shaped springs acts as if it were a small, stiff, vertical torsion bar primarily deflecting only at the ends in the direction of the A-A axis. Such support maintains linear motion along the drive axis A-A, and eliminates the need for the leaf springs 24 of FIGURE 3.

Using the example vibratory feeder described above, having a resultant mass of 227 kg (weight of 500 lbs.), and 6 ovoid-shaped spring elements, the total dynamic spring rate would be 6 x 700 = 4200 Nmm-1 (24,000 lbs./in). The above equation for calculating dynamic spring rate Kd :

$$K_d = \frac{\omega_0^2}{1000} \cdot m_r \qquad (\text{or} \qquad K_d = \frac{\omega_0^2}{g} \cdot W_r)$$

can be rearranged to calculate the natural frequency $f_0$ of the feeder's spring mass system along the A-A axis. Since $\omega_o$ is the same as $2\pi f_o$ then:

$$f_0 = \frac{1}{2\pi} \cdot \sqrt{\frac{1000 K_d}{m_r}} = \frac{1}{2\pi} \cdot \sqrt{\frac{K_d \cdot g}{W_r}}$$

Using the values of 4200 Nmm$^{-1}$ (24,000lbs./in.) for $K_d$ and 227 kg for $m_r$ (500 lbs. for W$_r$) we get:

$$f_{0\,A\text{-}A} = \frac{1}{2 \times 3.14159} \cdot \sqrt{\frac{4200000}{227}} \approx 21.6\,\text{Hz}$$

If the spring rate along the B-B axis were 4 times greater than that along the A-A axis then the natural frequency in the B-B direction would be:

$$f_{0\,B\text{-}B} = \frac{1}{2 \times 3.14159} \cdot \sqrt{\frac{4 \times 4200000}{227}} \approx 43.3\,\text{Hz}$$

Accordingly, if the operating frequency of the feeder was 19 Hz (1140 cpm), the dimensionless ratio of the operating frequency divided by the natural frequency $(N/N_o)$, often referred to as lambda ($\lambda$), would be .88 along the A-A axis and .44 along the B-B axis. The ratio "lambda" represents a figure of operational merit or amplification due to the resonance phenomena, the amplification factor being expressed by the relationship $1/1- \lambda^2$. The ratio "lambda" at resonance, where the operating frequency and the natural frequency are equal $(N = N_o)$, would therefore be 1 and the amplification factor theoretically would be infinite. At $\lambda = 0.999999$ the amplification factor would be 500,000, at $\lambda = 0.9$, it would be 4.78, at $\lambda = 0.88$ it would be 4.433, and at $\lambda = 0.44$ it would be 1.24. The amplification factor has a direct bearing on the force requirements to produce the desired amplitude of vibration on the feeder trough.

In our example feeder, a single rotating shaft with an eccentric weight mounted on it would produce sufficient force to generate the vibration amplitude of 9.5 mm (0.375 in.) along the A-A axis, but only a fraction of that amplitude along the B-B shear axis. This assures a relatively linear trough motion back and forth along the A-A axis, and consequently along the drive line 200 of FIGURE 2, which it parallels, passing through the center of gravity 210 of the feeder, to eliminate undesirable off axis motion.

The ovoid-shaped spring therefore compares favorably to the elastomer spring, having the same advantages of a high spring rate, and being stiff enough in the shear direction to support the exciter without the need for additional support springs, while maintaining a desirable vibratory motion pattern. The ovoid-shaped spring also retains the advantageous features of the steel coil spring in that it has a consistent, repeatable spring rate, and an effectively infinite shelf life allowing the springs to be mass produced and held in inventory. Since the material, manufacturing methods, and techniques allow the manufacturer to produce springs having dimensions and spring rates held within close tolerances, only one basic spring element design is required, and therefore, the need for the expensive testing and grading required for elastomer springs is obviated, as is the need to carry multiple spring elements in inventory.

The ovoid-shaped springs 134 in FIGURES I and 2, in a preferred embodiment of the invention, are mounted between mild steel spring end plates 136, fitting over rectangular shaped mild steel spring seats 135, which have been welded in a symmetrically spaced array to the spring end plates 136, forming a feeder drive spring assembly. For vibratory feeders of standard size and weight, such assemblies may be made in advance of feeder production and held in inventory. Such inventory may also be used to replace a spring assembly in a feeder at a customers site should a spring element break due to some unforeseen event.

The top and bottom dead turns of the spring elements may be tack welded in place to the end plates 136 if desired, to facilitate assembly to the feeder and to make inventory storage easier. According to FIGURE 1, two sets of spring assemblies are provided for each feeder, one set bolted between the spring assembly backing plate 124 which is welded between the feeder wing plates 114, and one side of the vibratory exciter 130, and the other set bolted between the exciter 130 and the feeder back plate 140. When the feeder back plate 140 is bolted to the ends of the wing plates 114, the spring assemblies are compressed by a known amount set by the space between the spring assembly backing plate 124, and the feeder back plate 140. The amount of compression on each assembly is predetermined to be a little more than the total stroke of the feeder (i.e., the trough stroke plus the exciter stroke [$A_T + A_M$]), such that in operation the spring elements 134 never go into tension. Therefore, even if the spring elements 134 were not welded in place, they would remain tightly positioned between their respective mounting plates during operation of the feeder.

The following methodology outlines the design process to configure a conveying apparatus embodying the invention:

- Determine the dimensions of the vibratory feeder trough based on application information, and calculate the weight of all of the trough-side members, plus an estimate of the weight of half of the spring assemblies.
- Select an exciter from a number of available standard units and calculate the weight of all of the exciter-side members, which include the drive motor and its components, plus an estimate of the weight of half of the spring assemblies.
- Select goals for the operating speed of the feeder *(N),* and for lambda λ, to determine the natural frequency *($N_0$)* of the feeder. Also select the trough stroke *($A_T$)* that will be required to produce a determined feed rate.
- Using the appropriate equation in the disclosure, calculate the required spring rate *($K_d$)* for the feeder using the weights calculated from the previous steps, and the natural frequency *($N_0$)* determined above.
- Using an ovoid or rectangular spring element designed to have a spring rate of 700 Nmm$^{-1}$ (4000 lbs./in.), a deflection of at least 9.5 mm (.375 in.), and a spring rate along its transverse shear axis of at least four times that of its compressive rate, determine the number of spring elements required in parallel to meet the feeder's spring rate *($K_d$)* by dividing it by 700 (Metric measurements above) (or 4000, Imperial measurements above) (i.e., $S_n = K_d$/700 (Metric), or $S_n = K_d$/4000 (Imperial)). If the answer is fractional or uneven, round the number of springs up or down to the next even number of springs and recalculate the feeder's design parameters, adjusting the operating speed of the feeder (*N*), and/or the trough stroke (*$A_T$*) as necessary to meet the application requirements of the feeder.
- Design the feeder such that the space between the spring assembly backing plate 124, and the feeder back plate 140, is the width of the exciter assembly 130, plus the width of two spring assemblies, minus a little more than twice the total stroke of the feeder (i.e. twice the trough stroke plus the exciter stroke [$2 \cdot (A_T + A_M)$]).
- Divide the ovoid springs into two even sets and assemble each set between two mild steel spring end plates 136, fitting them over the rectangular shaped mild steel spring seats 135, which have been welded in a symmetrically spaced array to the spring end plates 136, to form two feeder drive spring assemblies. Tack-weld the ovoid springs to the end plates 136 if desired, to facilitate assembly to the feeder.
- Manufacture the feeder as designed; bolt one of the spring assemblies to the spring assembly backing plate 124, and to the front face of the exciter assembly 130, then bolt the other spring assembly to the back face of the exciter assembly 130, and to the feeder back plate 15. Bolt the feeder back plate 140 to the ends of the wing plates 114, compressing the spring assemblies to twice the trough stroke plus the exciter stroke [i.e., $2 \cdot (A_T + A_M)$].

From the foregoing, it will be observed that numerous variations and modifications may be effected without departing from the scope of the invention as defined in the claims. It is to be understood that no limitation with respect to the specific apparatus illustrated herein is intended or should be inferred.

**Claims**

1. A vibratory conveying apparatus (100), comprising:

> a trough (111) having a conveying surface (112);
> a vibratory exciter (130);
> a first coil spring (134) arranged to be compressed between a first portion of the trough and a first portion of the exciter, said coil spring having a longitudinal axis (A-A) around which said first coil spring is wound, a transverse axis (B-B) and a lateral axis (C-C), said transverse axis and said lateral axis being perpendicular and in a plane perpendicular to the longitudinal axis,

**characterized in that** an outside dimension of said first coil spring is greater along the lateral axis than along the transverse axis.

2. The apparatus (100) according to claim 1, wherein said first coil spring (134) has a cross section, taken in said plane, that is ovoid-shaped.

3. The apparatus (100) according to claim 1, wherein said first coil spring (134) has a cross section, taken in said plane, that is rectangular.

4. The apparatus (100) according to any of claims 1 - 3, comprising a second coil spring (134) arranged to be compressed between a second portion of the trough (111) and a second portion of the exciter (130), said second coil spring having a longitudinal axis (A-A) around which said second coil spring is wound, a transverse axis (B-B) and a lateral axis (C-C), said transverse axis and said lateral axis being perpendicular and in a plane perpendicular to the longitudinal axis, an outside dimension of said second coil spring being greater along the lateral axis than along the transverse axis.

5. The apparatus (100) according to claim 4, wherein said first and second portions of said exciter (130) are on opposing sides of the exciter, and said first and second coil springs (134) compress and unload in opposition.

6. The apparatus (100) according to claim 4, wherein said first and second portions of said exciter (130) are on a same side of the exciter, and said first and second coil springs (134) compress and unload together.

7. The apparatus (100) according to claim 4, 5 or 6, wherein said longitudinal axes (A-A of said first and second coil springs (134) are arranged at an oblique angle to said conveying surface (112).

8. The apparatus (100) according to any of claims 4 to 7, wherein said longitudinal axes (A-A) of said first and second coil springs (134) are co-linear.

9. The apparatus (100) according to any of claims 4 to 8, wherein said trough (111) comprises a bracket assembly (113) that includes a front plate (124) and a back plate (140), and said exciter (130) is located between said front and back plates, said first portion of said trough being on said front plate and said second portion of said trough being on said back plate.

10. The apparatus (100) according to any of claims 4 to 9, comprising a third coil spring (134) arranged to be compressed between a third portion of the trough (111) and a third portion of the exciter (130), said third coil spring having a longitudinal axis (A-A) around which said third coil spring is wound, a transverse axis (B-B) and a lateral axis (C-C), said transverse axis and said lateral axis being perpendicular and in a plane perpendicular to the longitudinal axis, an outside dimension of said third coil spring being greater along the lateral axis than along the transverse axis, and comprising a forth coil spring (134) arranged to be compressed between a fourth portion of the trough (111) and a fourth portion of the exciter (130), said fourth coil spring having a longitudinal axis (A-A) around which said fourth coil spring is wound, a transverse axis (B-B) and a lateral axis (C-C), said transverse axis and said lateral axis being perpendicular and in a plane perpendicular to the longitudinal axis, an outside dimension of said fourth coil spring being greater along the lateral axis than along the transverse axis, wherein said first and second portions of said exciter (130) are on opposing sides of the exciter, and said first and second coil springs (134) compress and unload in opposition, and wherein said third and fourth portions of said exciter (130) are on opposing sides of the exciter, and said third and fourth coil springs (134) compress and unload in opposition.

11. The apparatus (100) according to claim 10, wherein said trough (111) comprises a bracket assembly (113) that includes a front plate (124) and a back plate (140), and said exciter (130) is located between said front and back plates, said first and third portions of said trough (111) being on said front plate and said second and fourth portions of said trough being on said back plate.

12. The apparatus (100) according to any preceding claim, wherein said exciter (130) comprises a motor-driven rotating eccentric weight.

13. The apparatus (100) according to any preceding claim, wherein said trough (111) includes connecting elements (156, 192) for supporting said trough from above.

14. A method of assembling a vibratory conveying apparatus (100), comprising the steps of:

calculating the weight or mass of a trough (111, 114, 124, 140), plus an estimate of the weight or mass of half of a spring assembly (134, 135);

calculating the weight or mass of an exciter (130), which includes a drive motor (176) and its components (180,182, 184), plus an estimate of the weight or mass of half of the spring assemblies;

selecting goals for the operating speed of the conveying apparatus ($N$), and for lambda $\lambda$, to determine the natural frequency ($N_0$) of the conveying apparatus;

selecting the trough stroke ($A_T$) that will be required to produce a determined feed rate; calculating the required spring rate ($K_d$) for the conveying apparatus using the weights or masses calculated from the previous steps, and the natural frequency ($\omega_0$) determined above,; and

using a spring element (134), designed to have a spring rate along its transverse shear axis (B-B) of at least four times that of its compressive rate, determine the number of spring elements required in parallel to meet the feeder's spring rate ($K_d$) by dividing it by the compressive spring rate.

**Patentansprüche**

1. Schwingfördervorrichtung (100), umfassend:

   eine Mulde (111) mit einer Förderoberfläche (112);
   einen Schwinganreger (130);
   eine erste Schraubenfeder (134), ausgelegt zum Komprimiertwerden zwischen einem ersten Abschnitt der Mulde und einem ersten Abschnitt des Anregers, wobei die Schraubenfeder eine Längsachse (A-A), um die die erste Schraubenfeder gewickelt ist, eine Querachse (B-B) und eine seitliche Achse (C-C) aufweist, wobei die Querachse und die seitliche Achse senkrecht stehen und in einer Ebene senkrecht zur Längsachse liegen,

   **dadurch gekennzeichnet, daß** eine Außenabmessung der ersten Schraubenfeder entlang der seitlichen Achse größer ist als entlang der Querachse.

2. Vorrichtung (100) nach Anspruch 1, wobei die erste Schraubenfeder (134) einen Querschnitt aufweist, der in der Ebene ovoidförmig ist.

3. Vorrichtung (100) nach Anspruch 1, wobei die erste Schraubenfeder (134) einen Querschnitt aufweist, der in der Ebene rechteckig ist.

4. Vorrichtung (100) nach einem der Ansprüche 1-3, umfassend eine zweite Schraubenfeder (134), ausgelegt zum Komprimiertwerden zwischen einem zweiten Abschnitt der Mulde (111) und einem zweiten Abschnitt des Anregers (130), wobei die Schraubenfeder eine Längsachse (A-A), um die die zweite Schraubenfeder gewickelt ist, eine Querachse (B-B) und eine seitliche Achse (C-C) aufweist, wobei die Querachse und die seitliche Achse senkrecht stehen und in einer Ebene senkrecht zur Längsachse liegen, wobei eine Außenabmessung der zweiten Schraubenfeder entlang der seitlichen Achse größer ist als entlang der Querachse.

5. Vorrichtung (100) nach Anspruch 4, wobei der erste und zweite Abschnitt des Anregers (130) sich auf entgegengesetzten Seiten des Anregers befinden und sich die erste und zweite Schraubenfeder (134) entgegengesetzt komprimieren und entlasten.

6. Vorrichtung (100) nach Anspruch 4, wobei sich der erste und zweite Abschnitt des Anregers (130) auf einer gleichen Seite des Anregers befinden und sich die erste und zweite Schraubenfeder (134) zusammen komprimieren und entlasten.

7. Vorrichtung (100) nach Anspruch 4, 5 oder 6, wobei die Längsachsen (A-A) der ersten und zweiten Schraubenfeder (134) unter einem schrägen Winkel zu der Förderoberfläche (112) angeordnet sind.

8. Vorrichtung (100) nach einem der Ansprüche 4 bis 7, wobei die Längsachsen (A-A) der ersten und zweiten Schraubenfeder (134) kolinear sind.

9. Vorrichtung (100) nach einem der Ansprüche 4 bis 8, wobei die Mulde (111) eine Halterungsbaugruppe (113) umfaßt, die eine Frontplatte (124) und eine Rückplatte (140) enthält, und sich der Anreger (130) zwischen der Front- und Rückplatte befindet, wobei sich der erste Abschnitt der Mulde an der Frontplatte befindet und sich der zweite Abschnitt der Mulde an der Rückplatte befindet.

**10.** Vorrichtung (100) nach einem der Ansprüche 4 bis 9, umfassend eine dritte Schraubenfeder (134), ausgelegt zum Komprimiertwerden zwischen einem dritten Abschnitt der Mulde (111) und einem dritten Abschnitt des Anregers (130), wobei die Schraubenfeder eine Längsachse (A-A), um die die dritte Schraubenfeder gewickelt ist, eine Querachse (B-B) und eine seitliche Achse (C-C) aufweist, wobei die Querachse und die seitliche Achse senkrecht stehen und in einer Ebene senkrecht zur Längsachse liegen, wobei eine Außenabmessung der dritten Schraubenfeder entlang der seitlichen Achse größer ist als entlang der Querachse, und umfassend eine vierte Schraubenfeder (134), ausgelegt zum Komprimiertwerden zwischen einem vierten Abschnitt der Mulde (111) und einem vierten Abschnitt des Anregers (130), wobei die Schraubenfeder eine Längsachse (A-A), um die die vierte Schraubenfeder gewickelt ist, eine Querachse (B-B) und eine seitliche Achse (C-C) aufweist, wobei die Querachse und die seitliche Achse senkrecht stehen und in einer Ebene senkrecht zur Längsachse liegen, wobei eine Außenabmessung der vierten Schraubenfeder entlang der seitlichen Achse größer ist als entlang der Querachse, wobei der erste und zweite Abschnitt des Anregers (130) sich auf entgegengesetzten Seiten des Anregers befinden und sich die erste und zweite Schraubenfeder (134) entgegengesetzt komprimieren und entlasten und wobei der dritte und vierte Abschnitt des Anregers (130) sich auf entgegengesetzten Seiten des Anregers befinden und sich die dritte und vierte Schraubenfeder (134) entgegengesetzt komprimieren und entlasten.

**11.** Vorrichtung (100) nach Anspruch 10, wobei die Mulde (111) eine Halterungsbaugruppe (113) umfaßt, die eine Frontplatte (124) und eine Rückplatte (140) enthält, und sich der Anreger (130) zwischen der Front- und Rückplatte befindet, wobei sich der erste und dritte Abschnitt der Mulde (111) an der Frontplatte befinden und sich der zweite und vierte Abschnitt der Mulde an der Rückplatte befinden.

**12.** Vorrichtung (100) nach einem der vorhergehenden Ansprüche, wobei der Anreger (130) ein motorgetriebenes sich drehendes exzentrisches Gewicht umfaßt.

**13.** Vorrichtung (100) nach einem der vorhergehenden Ansprüche, wobei die Mulde (111) verbindende Elemente (156, 192) zum Tragen der Mulde von oben umfaßt.

**14.** Verfahren zum Montieren einer Schwingfördervorrichtung (100), umfassend die folgenden Schritte:

Berechnen des Gewichts oder der Masse einer Mulde (111, 114, 124, 140) plus einem Schätzwert des Gewichts oder der Masse der Hälfte einer Federbaugruppe (134, 135);
Berechnen des Gewichts oder der Masse eines Anregers (130), der einen Antriebsmotor (176) und seine Komponenten (180, 182, 184) enthält, plus einem Schätzwert des Gewichts oder der Masse der Hälfte der Federbaugruppen;
Auswählen von Zielen für die Arbeitsgeschwindigkeit der Fördervorrichtung ($N$) und für lambda $\lambda$ zum Bestimmen der Eigenfrequenz ($N_0$) der Fördervorrichtung;
Auswählen des Muldenhubs ($A_T$), der erforderlich ist, um eine bestimmte Beschickrate zu erzeugen;
Berechnen der erforderlichen Federrate ($K_d$) für die Fördervorrichtung unter Verwendung der von den vorherigen Schritten berechneten Gewichte oder Massen und der oben bestimmten Eigenfrequenz ($\omega_0$) ; und
Verwenden eines Federelements (134), ausgelegt, um eine Federrate entlang seiner Querscherachse (B-B) von mindestens dem Vierfachen der seiner Druckrate aufzuweisen, Bestimmen der Anzahl von Federelementen, die parallel erforderlich sind, um die Federrate ($K_d$) des Beschickers zu erfüllen, indem sie durch die Druckfederrate dividiert wird.

**Revendications**

**1.** Appareil de transport vibratoire (100), comprenant:

un bac (111) ayant une surface de transport (112); un excitateur vibratoire (130) ;
un premier ressort à boudin (134) prévu pour être comprimé entre une première portion du bac et une première portion de l'excitateur, ledit ressort à boudin ayant un axe longitudinal (A-A) autour duquel est enroulé ledit premier ressort à boudin, un axe transversal (B-B) et un axe latéral (C-C), ledit axe transversal et ledit axe latéral étant perpendiculaires et dans un plan perpendiculaire à l'axe longitudinal,

**caractérisé en ce qu'**une dimension extérieure dudit premier ressort à boudin est plus grande le long de l'axe latéral que le long de l'axe transversal.

2. Appareil (100) selon la revendication 1, dans lequel le premier ressort à boudin (134) a une section transversale, vue dans ledit plan, de forme ovoïde.

3. Appareil (100) selon la revendication 1, dans lequel le premier ressort à boudin (134) a une section transversale, vue dans ledit plan, de forme rectangulaire.

4. Appareil (100) selon l'une quelconque des revendications 1 à 3, comprenant un deuxième ressort à boudin (134) prévu pour être comprimé entre une deuxième portion du bac (111) et une deuxième portion de l'excitateur (130), ledit deuxième ressort à boudin ayant un axe longitudinal (A-A) autour duquel est enroulé ledit deuxième ressort à boudin, un axe transversal (B-B) et un axe latéral (C-C), ledit axe transversal et ledit axe latéral étant perpendiculaires et dans un plan perpendiculaire à l'axe longitudinal, une dimension extérieure dudit deuxième ressort à boudin étant plus grande le long de l'axe latéral que le long de l'axe transversal.

5. Appareil (100) selon la revendication 4, dans lequel lesdites première et deuxième portions dudit excitateur (130) sont sur des côtés opposés de l'excitateur, et lesdits premier et deuxième ressorts à boudin (134) se compriment et se détendent en opposition.

6. Appareil (100) selon la revendication 4, dans lequel lesdites première et deuxième portions dudit excitateur (130) sont du même côté de l'excitateur et lesdits premier et deuxième ressorts à boudin (134) se compriment et se détendent ensemble.

7. Appareil (100) selon la revendication 4, 5 ou 6, dans lequel lesdits axes longitudinaux (A-A) desdits premier et deuxième ressorts à boudin (134) sont disposés suivant un angle oblique par rapport à ladite surface de transport (112).

8. Appareil (100) selon l'une quelconque des revendications 4 à 7, dans lequel lesdits axes longitudinaux (A-A) desdits premier et deuxième ressorts à boudins (134) sont colinéaires.

9. Appareil (100) selon l'une quelconque des revendications 4 à 8, dans lequel ledit bac (111) comprend un ensemble de console (113) qui comporte une plaque frontale (124) et une plaque arrière (140), et ledit excitateur (130) est situé entre lesdites plaques frontale et arrière, ladite première portion dudit bac étant sur ladite plaque frontale et ladite deuxième portion dudit bac étant sur ladite plaque arrière.

10. Appareil (100) selon l'une quelconque des revendications 4 à 9, comprenant un troisième ressort à boudin (134) prévu pour être comprimé entre une troisième portion du bac (111) et une troisième portion de l'excitateur (130), ledit troisième ressort à boudin ayant un axe longitudinal (A-A) autour duquel est enroulé ledit troisième ressort à boudin, un axe transversal (B-B) et un axe latéral (C-C), ledit axe transversal et ledit axe latéral étant perpendiculaires et dans un plan perpendiculaire à l'axe longitudinal, une dimension extérieure dudit troisième ressort à boudin étant plus grande le long de l'axe latéral que le long de l'axe transversal, et comprenant un quatrième ressort à boudin (134) prévu pour être comprimé entre une quatrième portion du bac (111) et une quatrième portion de l'excitateur (130), ledit quatrième ressort à boudin ayant un axe longitudinal (A-A) autour duquel est enroulé ledit quatrième ressort à boudin, un axe transversal (B-B) et un axe latéral (C-C), ledit axe transversal et ledit axe latéral étant perpendiculaires et dans un plan perpendiculaire à l'axe longitudinal, une dimension extérieure dudit quatrième ressort à boudin étant plus grande le long de l'axe latéral que le long de l'axe transversal, lesdites première et deuxième portions dudit excitateur (130) étant sur des côtés opposés de l'excitateur, et lesdits premier et deuxième ressorts à boudin (134) se comprimant et se détendant en opposition, et lesdites troisième et quatrième portions dudit excitateur (130) étant sur des côtés opposés de l'excitateur, et lesdits troisième et quatrième ressorts à boudin (134) se comprimant et se détendant en opposition.

11. Appareil (100) selon la revendication 10, dans lequel ledit bac (111) comprend un ensemble de console (113) qui comporte une plaque frontale (124) et une plaque arrière (140), et ledit excitateur (130) est situé entre lesdites plaques frontale et arrière, lesdites première et troisième portions dudit bac (111) étant sur ladite plaque frontale et lesdites deuxième et quatrième portions dudit bac étant sur ladite plaque arrière.

12. Appareil (100) selon l'une quelconque des revendications précédentes, dans lequel ledit excitateur (130) comprend un poids excentrique rotatif entraîné par un moteur.

13. Appareil (100) selon l'une quelconque des revendications précédentes, dans lequel ledit bac (111) comporte des éléments de connexion (156, 192) pour supporter ledit bac par le haut.

14. Procédé pour assembler un appareil de transport vibratoire (100), comprenant les étapes consistant à :

calculer le poids ou la masse d'un bac (111, 114, 124, 140), plus une estimation du poids ou de la masse de la moitié d'un ensemble de ressort (134, 135) ;
calculer le poids ou la masse d'un excitateur (130), qui comporte un moteur d'entraînement (176) et ses composants (180, 182, 184), plus une estimation du poids ou de la masse de la moitié des ensembles de ressort ;
sélectionner des objectifs pour la vitesse fonctionnelle de l'appareil de transport ($N$) et pour lambda $\lambda$, pour déterminer la fréquence naturelle ($N_0$) de l'appareil de transport ;
sélectionner la course du bac *($A_T$)* qui sera requise pour produire un taux d'alimentation déterminé ;
calculer la raideur du ressort requise ($K_d$) pour l'appareil de transport en utilisant les poids ou les masses calculées à partir des étapes précédentes, et la fréquence naturelle ($\omega_0$) déterminée ci-dessus ; et
utiliser un élément de ressort (134) conçu pour avoir une raideur de ressort le long de son axe de cisaillement transversal (B-B) d'au moins quatre fois son taux de compression, déterminer le nombre d'éléments de ressort requis en parallèle pour satisfaire à la raideur de ressort ($K_d$) du dispositif d'alimentation en le divisant par la raideur de ressort en compression.

100

111  116  112

154

121

150

136

134  124

130

114

144  140

154

## FIG. 1

B

134

A

C

160

A

C

160

B

## FIG. 1a

FIG. 2

FIG. 3
(PRIOR ART)

FIG. 4
(PRIOR ART)

FIG. 5